# EUROPÄISCHE PATENTSCHRIFT

(11) **EP 1 956 128 B1**
(45) Veröffentlichungstag und Bekanntmachung des Hinweises auf die Patenterteilung: **14.10.2009**
(21) Anmeldenummer: 07014997.6
(22) Anmeldetag: 31.07.2007
(51) Int. Cl.: D04B 21/14, A41D 27/06

(54) **Elastische Einlage, Verfahren zu deren Herstellung und Verwendung**
Elastic interlining, method for its manufacture and use
Entoilage élastique, son procédé de fabrication et d'utilisation

(30) Priorität: 09.02.2007 DE 102007006568
(43) Veröffentlichungstag der Anmeldung: 13.08.2008
(73) Patentinhaber: Kufner Textil GmbH, 81379 München (DE)
(72) Erfinder: Scherbel, Ulrich, 81825 München (DE); Gerlicher, Antje, 81739 München (DE)
(74) Vertreter: HOFFMANN EITLE

(56) Entgegenhaltungen:
- DE-A1- 2 439 894
- DE-A1- 2 539 994
- DE-A1- 19 644 111
- DE-A1- 19 904 265

## Beschreibung

Diese Erfindung betrifft eine elastische Einlage, insbesondere elastische Fixiereinlage auf Basis eines Gewirkes, ein Verfahren zu deren Herstellung und ihre Verwendung.

Einlagen werden seit vielen Jahren in der Bekleidungsindustrie, vor allem zur Verstärkung des Vorderteils von Bekleidungsstücken oder zur Verstärkung von Krägen und Manschetten eingesetzt. Diese Einlagen bestehen aus einem Träger, der als Gewebe, Gewirke oder auch als Vlies ausgebildet sein kann, und aus einer üblicherweise thermoplastischen Klebemasse, die in der Form eines Rasters aufgebracht ist, wobei diese Klebemasse eine Verklebung mit dem Oberstoff der Bekleidungsstücke ermöglicht.

Solche Einlagen haben die Aufgabe, das Kleidungsstück formgerecht zu gestalten und zu stabilisieren. Da sie mit dem Oberstoff verklebt werden, beeinflussen sie den Charakter des fertigen Kleidungsstückes in entscheidender Weise. Die Optik, Formstabilität, Weichheit, der Tragekomfort sowie die Pflegeeigenschaften bei der Reinigung und der Wäsche hängen entscheidend von der Art und dem Aufbau der verwendeten Einlage ab. Besonders wichtige Eigenschaften der Bekleidungsstücke sind hierbei die Optik, der Griff und das Pflegeverhalten des fertigen Bekleidungsstücks.

Die Bekleidungsstücke müssen zudem den wechselnden Modetrends entsprechen. Deshalb werden verschiedenste Oberstoffe eingesetzt. Dementsprechend werden in der Regel auch verschiedene Arten von Einlagen zur Verstärkung dieser unterschiedlichen Oberstoffe verwendet.

Gewirke als Trägermaterial werden grundsätzlich für Einlagematerialien bereits verwendet. In diesem Fall werden für den Schuss üblicherweise Stapelfasergarne aus Viskose (CV), Baumwolle (CO), Polyester (PES), Polyacrylnitril (PAN) oder deren Mischungen verwendet. Die Kette wird in der Regel aus feinen Filamentgarnen gebildet, die bevorzugt aus Polyester oder Polyamid bestehen und eine Feinheit im Bereich von 15 dtex bis 78 dtex haben. Das Gewicht derartiger Einlagen liegt üblicherweise im Bereich von 35 bis 140 g/m². Die erzeugten Gewirke können beispielsweise thermisch krumpfstabilisiert werden. Weiterhin ist es möglich, eine Warenseite zu rauen oder zu schmirgeln, wodurch ein möglichst dichter Faserflor an der Oberfläche der Einlage erzeugt und somit eine hohe Weichheit und Volumen sowie Geschlossenheit der Einlage erzielt wird. Derartige Einlagen sind zwar sehr weich, jedoch ist die Elastizität nicht ausreichend, insbesondere wenn die nicht elastischen Stapelfasergarne eingesetzt werden.

Der Auftrag mit einer Klebemasse, bevorzugt thermoplastischen Schmelzklebermasse, erfolgt nach einem üblichen Verfahren. Beim Verkleben der Einlage mit dem Oberstoff des Bekleidungsstückes verhindert der Faserflor auf der Rückseite ein Durchdringen der Schmelzklebermasse durch die Einlage hindurch in Richtung zur Seite des Futterstoffs.

Es ist auch bereits bekannt, Einlagen aus texturierten Garnen zu erzeugen, um Volumen und Weichheit zu erhalten. Hierfür werden die Garne durch spezielle Texturierverfahren erzeugt. Nachteilig bei solchen Einlagen ist jedoch, dass die Garne, die aus zwei Fadensystemen erzeugt sind, auch nicht elastisch sind und dass es durch Bildung einer Schlaufenstruktur zusätzlich zu Verhakungen der Warenbahnen untereinander kommen kann. Darüber hinaus ist auch eine unruhige und unebene Oberfläche nicht ohne weiteres durch ein gängiges Beschichtungsverfahren, nämlich dem Pasten-Streu-Doppelpunktverfahren zu beschichten. Daher ist eine Nachbehandlung notwendig, um eine gleichmäßigere Warenoberfläche zu erhalten, die dann wieder entsprechend dem üblichen Verfahren beschichtet werden kann. Eine Einlage unter Verwendung von lufttexturierten Materialien ist beispielsweise aus EP-A-0 810 314 bekannt.

Eine weitere Einlage unter Verwendung von falschdrahttexturierten Polyester-Filamentgarnen ist ebenfalls in den letzten Jahren entwickelt worden. Diese Polyester-Filamentgarne werden als Schussfäden eingesetzt, und die Kette kann ähnlich aufgebaut sein wie es bei den bereits bekannten Einlagen oben angegeben ist. Derartige Einlagen sind beispielsweise in DE 93 198 70 U1 beschrieben.

Die Eigenschaften solcher Fixiereinlagen werden entscheidend von den Eigenschaften der texturierten, besonders falschdrahttexturierten Polyester-Filamentgarne geprägt. Fixiereinlagen aus falschdrahttexturierten Polyester-Filamentgarnen sind in hohem Maße elastisch, weil sie sich sehr leicht bei Zugbelastungen in Kett- und Schussrichtung ebenso wie im Schrägzug dehnen. Durch eine solche Elastizität ist die Einlage in der Lage, der Dimensionsänderung des Oberstoffes durch Wärme, beim Waschen, durch Lösungsmittel beim Reinigen oder durch Außenkräfte zu folgen.

Eine preislich konkurrenzfähige, elastische Einlage wurde weiterentwickelt, die beispielsweise in DE 199 04 265 A1 beschrieben ist. Eine derartige Einlage hat die niedrigen Krumpfwerte und guten Pflegeeigenschaften der Einlagen aus falschdrahttexturierten PES-Filamenten und kombiniert diese vorteilhaften Eigenschaften mit dem weichen Griff einer klassischen, gerauten Einlage. Eine derartige Einlage wird aus Filamenten erzeugt, wobei das erzeugte Rohmaterial (Gewebe oder Gewirke) beispielsweise durch Schmirgeln aufgeraut wird. Hierdurch ist es möglich, eine weiche und zudem elastische Einlage zu erzielen.

Es sind jedoch weitere Einlagen gewünscht, die besonders einfach und kostengünstig herzustellen sind, die die Vorteile der texturierten, elastischen Einlagen mit denen der starren, gerauhten Einlagen verbinden und sogar eine gleich hohe Elastizität wie die bekannten Einlagen aufweisen oder bei denen die Elastizität sogar noch verbessert werden kann.

Überraschenderweise wurde festgestellt, dass eine derartige Einlage zur Verfügung gestellt werden kann durch einen Träger auf der Basis eines Gewirkes, das aus mindestens zwei und bevorzugt zwei bis drei Kettfadensystemen aufgebaut ist, wobei mindestens eines dieser Kettfadensysteme als Teilschuss in das Gewirke eingelegt ist und nicht elastische Stapelfasergarne enthält. Eine derartige Einlage zeichnet sich durch einen sehr weichen, textilen Griff, eine gute Optik und hohe Elastizitätswerte von bis zu maximal 50 % in Schussrichtung und etwa 10% in Kettrichtung aus. Derartige Werte können durch (Mit-)Verwendung texturierter Fäden, insbesondere falschdrahttexturierter Filamente auch bei dem Teilschuss noch erhöht werden.

Erfindungsgemäß wird somit die hohe Elastizität und Dehnfähigkeit einer Fixiereinlage insbesondere in Schussrichtung durch eine Kombination der speziellen Kettlegung und der Verwendung von an sich nicht elastischen Stapelfasergarnen erzielt. Eine derartige hohe Elastizität in Schussrichtung bei Einsatz von grundsätzlich nicht elastischen Garnen wie Stapelfasergarnen aus Baumwolle, Viskose, Polyacryl, Polyester, Polyamid, Polypropylen oder Mischungen hieraus ist völlig überraschend. Ein Gewirke aus solchen Stapelfasergarnen kombiniert mit der speziellen Kettlegung wurde bisher noch nicht als Fixiereinlage für die Verstärkung von Bekleidungsstücken entworfen. Vielmehr ist grundsätzlich überlegt worden, spezielle Garne wie falschdrahttexturierte Polyestergarne einzusetzen, also Materialien, die als solche elastisch sind. Um noch höhere Elastizitätswerte zu erzielen, ist es erfindungsgemäß möglich, als Schussgarnersatz beispielsweise zwei Kettfadensysteme einzusetzen, von denen eines die genannten Stapelfasergarne enthält und der andere beispielsweise die üblicherweise verwendeten (falschdraht)texturierten Polyestergarne aufweist.

Die folgende Tabelle zeigt die bekannten Durchschusswirkwaren im Vergleich zur Teilschussware hinsichtlich Schusselastizität:

| **Typ Wirkware** | **Legung** | **Schussgarn** | **Schusselastizität** |
|---|---|---|---|
| Durchschuss | Offene / geschlossene Franse | Stapelfasergarn | 0-3 % |
| Durchschuss | Versetzte Franse, Trikot, Tuch | Stapelfasergarn | 5-10 % |
| Durchschuss | Offene / geschlossene Franse | Texturiertes Filamentgarn | 12-20 % |
| Durchschuss | Versetzte Franse, Trikot, Tuch | Texturiertes Filamentgarn | 15-20 % |
| Teilschuss | Offene / geschlossene Franse | Stapelfasergarn | Max. 10 % |
| Teilschuss | Versetzte Franse, Trikot, Tuch | Stapelfasergarn | 25-50 % |

Wesentlich bei dem Gewirke, das den Träger der erfindungsgemäßen Einlage darstellt, ist auch, dass gerade kein eigenes Schussgarn verwendet wird, sondern dass mindestens ein Kettfadensystem als Schussgarnersatz verwendet wird. Mehr spezifisch wird das Fadensystem in Querrichtung in die Ware eingelegt, so dass dieses nur durch andere Bindungselemente gehalten wird und weder Maschen noch Henkel/Schlaufen bildet. Das mindestens eine Kettfadensystem, das als Schussgarnersatz dient, wird als Teilschuss in das Gewirke eingebracht.

Bei bekannten Raschelfixiereinlagen erfolgt der Schusseintrag mittels einer Magazinschusseinrichtung in Form eines Durchschusses. Für solche Herstellungen sind speziell hergestellte Durchschuss-Raschelmaschinen erforderlich, die sehr teuer sind. Erfindungsgemäß ist es nicht mehr notwendig, derartige spezielle Raschelmaschinen einzusetzen. Vielmehr kann jede herkömmliche Maschine zur Gewirkeherstellung verwendet werden, wodurch sich auch der Vorteil der deutlich größeren Variabilität bei der Auswahl der Maschinen ergibt. Derartige gängige Maschinen erfordern nur etwa ein Drittel der Investitionskosten der speziellen Durchschuss-Raschelmaschinen, so dass sich bei Herstellung der erfindungsgemäßen Einlagen erhebliche Kostenreduktionen ergeben.

Durch den Verzicht auf den Eintrag des Schussfadens über die gesamte Warenbreite ist es möglich, durch Verwendung von Maschinen ohne Schusseintragsvorrichtung höhere Maschinengeschwindigkeiten zu erzielen.

Erfindungsgemäß wird eine Teilschusslegung angewandt, wobei überraschenderweise festgestellt wird, dass die verwendete Teilschusslegung in Abhängigkeit von der Maschendichte optisch einem herkömmlichen Schussfadeneintrag über die gesamte Warenbreite entsprechen kann . Der Teilschuss kann theoretisch bis zu unter 10 Nadeln erfolgen. Bevorzugt werden jedoch Legungen bis zu unter 5 Nadeln, besonders bevorzugt Legungen unter 3 bis zu unter 5 Nadeln. Die Maschendichte ist bevorzugt 10 - 15 / cm.

Grundsätzlich können bekannte Legungen wie die offene oder geschlossene Franse, versetzte Franse, Tuch oder Trikot eingesetzt werden. Die versetzte Franse, Tuch oder Trikot sind besonders bevorzugt, wenn besonders hohe Elastizitätswerte erzielt werden sollen. Bevorzugt werden bei der Erzeugung des erfindungsgemäß eingesetzten Gewirkes zwei bis drei Legeschienen verwendet, wobei Maschinenfeinheiten E12, E24, E28 oder E 32 verwendet werden können. Die Lochnadeln müssen nicht zwingend voll eingezogen sein (siehe Beispiele).

Durch die Teilschusslegung ergibt sich kein Zusammenhang des Schussgarnes über die gesamte Warenbreite. Es wurde jedoch festgestellt, dass durch diese spezielle Legung eine sehr hohe Elastizität sowohl in Quer- als auch in diagonaler Richtung erzielt werden kann. Wird wie bei den bekannten Raschelwaren angewandt, ein Durchschuss gelegt, der aus einem nicht elastischen Garn besteht, so wirkt dieser durchgehende Schuss blockierend, was heute als Nachteil angesehen wird.

Erfindungsgemäß können für das mindestens eine Kettfadensystem, das das Schussgarn ersetzt, die bekannten nicht elastischen Stapelfasergarne eingesetzt werden, wie Viskose, Baumwolle, Polyacryl, Polyester, Polyamid, Polypropylen oder auch Mischungen hieraus. Für die übrigen Kettfadensysteme, die das Gewirke ausmachen, können darüber hinaus auch die bekannten (falschdraht)texturierten Polyester- oder Polyamid-Filamente eingesetzt werden.

Die nicht elastische Garne des Kettfadensystems, das das Schussgarn ersetzt, können nach Erzeugung des Rohgewirkes auf übliche Weise geraut werden, beispielsweise durch Verwendung von Rauhkratzen oder Schmirgelpapier. Dann ist es möglich, ein Gewirke zu erzielen, das sich nicht nur durch eine hohe Elastizität, sondern auch durch einen sehr weichen, textilen Griff auszeichnet.

Erfindungsgemäß ist es somit gerade nicht erforderlich, texturierte Garne einzusetzen, die durch eine bestimmte, aufwändige Technologie hergestellt werden müssen. Auch ohne Verwendung derartiger spezieller Garne erhält die Einlage einen sehr weichen und textilen Griff, kombiniert mit einer Elastizität in Schussrichtung, die zum Teil auch höher ist als die Elastizität, die bei Verwendung von texturierten, insbesondere falschdrahttexturierten Filamentgarnen erzielt werden konnte.

Die Teilschusslegung erzeugt weiterhin ein geschlossenes Warenbild, wohingegen bekannte Raschelwaren mit einem Schussfaden, der als Durchschuss gelegt ist, bei niedriger Schussfadendichte eine offenere Optik zeigen können, die im fixierten Zustand bei manchen Oberstoffen zu nachteiligen optischen Erscheinungsbildern wie z.B. Moiréeffekt führen können

Die Fäden, die für die mindestens zwei Kettfadensysteme eingesetzt werden, haben eine Feinheit von 15 bis 80 dtex, bevorzugt 15 bis 125 dtex und besonders bevorzugt 15 bis 180 dtex. Die unterschiedlichen Kettfadensysteme können aus den gleichen oder auch aus unterschiedlichen Materialien bestehen. Insbesondere ist eine kostengünstige Einlage herzustellen, wenn Polyester und/oder Polyamid als übliches Kettfadensystem eingesetzt wird und wenn beispielsweise ein nicht elastisches Material wie Viskose, Baumwolle oder Polyacrylnitril als Kettfadensystem eingesetzt wird, das das bisher verwendete Schussgarn ersetzt. Bevorzugt werden erfindungsgemäß 2 bis 3 Kettfadensysteme verwendet.

Das Gewirke weist bevorzugt ein Gewicht von 15 bis 125 g/m² auf, wobei das Gewicht der Einlage je nach deren Verwendungszweck höher oder niedriger sein kann. Beispielsweise zur Verstärkung von Hemdenkrägen werden bevorzugt schwerere Einlagen eingesetzt.

Die Erfindung betrifft auch ein Verfahren zur Herstellung einer solchen Einlage. Das Gewirke wird auf übliche Weise hergestellt. Das erzeugte Rohgewirke kann danach einem üblichen Wasch- und/oder Schrumpfprozess unterzogen werden. Durch Hitze und Feuchtigkeit kann man einen Einsprung der Garne erreichen und erzielt so bereits eine gute Elastizität. Anschließend werden ggf. ein Färbeprozess und eine Thermostabilisierung am Spannrahmen durchgeführt.

Dann wird dieses Rohgewirke nach den üblichen Beschichtungsverfahren mit einem Adhäsiv, bevorzugt mit einem thermoplastischen Schmelzkleber oder einer reaktiven Beschichtungsmasse beschichtet. Der Auftrag kann auf übliche Weise in Rasterform erfolgen, wobei das Raster zwischen 1 und 200 Punkten/cm² liegen kann. Bevorzugt werden Raster zwischen 40 und 150 Punkten/cm² verwendet. Der Schmelzkleberauftrag erfolgt besonders bevorzugt nach dem Doppelpunktbeschichtungsverfahren oder Pulverpunktverfahren

Um einen besonders guten Griffeffekt zu erzielen, kann zusätzlich ein mechanischer Ausrüstungsvorgang, nämlich ein Aufrauen, beispielsweise durch Schmirgeln durchgeführt werden. Hierzu wird eine bekannte Schmirgelmaschine wie Wollwalzen- oder Lattenwalzenmaschine oder Kratzenraummaschine eingesetzt, wobei die Oberfläche der Warenbahn durch Reibung an einer oder mehreren Schmirgelwalzen oder durch Walzen mit umwickeltem Kratzenband angeraut wird.

Der Schmirgelvorgang kann sowohl bei Verwendung von nicht elastischen als auch elastischen Fäden für die Kettfadensysteme durchgeführt werden. Werden für die Kettfadensysteme Filamente eingesetzt, so werden diese durch den Aufrauvorgang an vielen Stellen zerrissen, um einen möglichst dichten und gleichmäßigen Flor aus abstehenden Faserenden zu erzielen.

Der Aufrauvorgang kann in verschiedenen Stufen des Verfahrens durchgeführt werden. So ist es beispielsweise möglich, den Aufrauvorgang nach dem Beschichten des Gewirkes mit dem Adhäsiv durchzuführen. In diesem Fall dringt etwas Beschichtungsmasse in die Fäden der Einlage ein und sorgt für eine zusätzliche Stabilisierung. Aus diesem Grund ist auch die Neigung zum Ausfransen gering.

Es ist selbstverständlich auch möglich, den Aufrauvorgang vor dem Beschichten beispielsweise nach der Herstellung des Rohgewirkes durchzuführen.

Der zusätzliche Färbevorgang, der wahlweise durchgeführt wird, erfolgt bevorzugt vor der Thermostabilisierung des Rohgewirkes. Im Anschluss an diese Thermostabilisierung erfolgt die Beschichtung einer Seite des erhaltenen Rohgewirkes mit dem Adhäsiv.

Als Material für die thermoplastische Klebemasse besonders bevorzugt ist ein Schmelzkleber auf (Co)Polyamid-, (Co)Polyester- und (Co)Polyethylenbasis oder eine Mischung aus den genannten Materialien. Das Auftragsgewicht ist im Allgemeinen 4 bis 30 g/m², mehr bevorzugt 6 bis 25 g/m².

Nachfolgend werden zur Erläuterung dieser Erfindung einige besonders bevorzugte Ausführungsbeispiele angegeben.
1. Beispiel:
   GB1 und GB2 versetzte Franse, gegenlegig
      PES glatt dtex 33
      Nadeleinzug: 1 voll - 1 leer
   GB3: Teilschuss 00-44
      CV Nm 34/1
      Nadeleinzug: 1 voll - 2 leer
   Arbeitsgänge in der Veredelung:
      - Rauhen / Schmirgeln
      - Ausrüsten/Thermofixieren
      - Beschichten
2.Beispiel:
   GB1 und GB2 versetzte Franse, gegenlegig
      PES glatt dtex 33
      Nadeleinzug: 1 voll - 1 leer
   GB3: Teilschuss 00-44
      CV Nm 28/1
      Nadeleinzug: 1 voll - 2 leer
   Arbeitsvorgänge in der Veredelung:
      - Rauhen / Schmirgeln
      - Ausrüsten/Thermofixieren
      - Beschichten.

Wie aus den Anwendungsbeispielen ersichtlich ist, wird das Gewirke nur aus Kettfadensystemen erzeugt und verzichtet somit auf die Verwendung von Schussfäden. Die Legung der Kettfädensysteme erfolgte im Teilschuss. Somit ist es möglich, mit herkömmlichen Materialien auf einfache und kostengünstige Weise eine Einlage zu erzeugen, die eine sehr gute Optik und darüber einen sehr weichen und textilen Griff aufweist und darüber hinaus eine hohe Elastizität in Längs- und Querrichtung und auch in diagonaler Richtung aufweist.

## Patentansprüche

1. Elastische Einlage auf Basis eines Gewirkes als Träger mit einer auf einer Seite des Trägers aufgebrachten Adhäsivschicht, **dadurch gekennzeichnet, dass** das Gewirke aus mindestens zwei Kettfadensystemen aufgebaut ist, wobei mindestens ein Kettfadensystem als Teilschuss in das Gewirke eingelegt ist und nicht elastische Stapelfasergarne enthält, und dass die Einlage auch in Schussrichtung elastisch ist.

2. Elastische Einlage nach Anspruch 1, **dadurch gekennzeichnet, dass** der Teilschuss bis zu unter zehn Nadeln erfolgt.

3. Elastische Einlage nach Anspruch 1 oder 2, **dadurch gekennzeichnet, dass** das Stapelfasergarn des Kettfadensystems, das im Teilschuss eingelegt ist, Viskose, Baumwolle, Polyacryl, Polyester, Polyamid, Polypropylen oder eine Mischung daraus enthält.

4. Elastische Einlage nach einem der Ansprüche 1 bis 3, **dadurch gekennzeichnet, dass** das mindestens eine Kettfadensystem, das im Teilschuss eingelegt ist, zusätzlich zu den Stapelfasergarnen bevorzugt falschdrahttexturierte Filamente enthält.

5. Elastische Einlage nach einem der Ansprüche 1 bis 4, **dadurch gekennzeichnet, dass** die Materialien der anderen Kettfadensysteme Polyester, Polyamid oder auch Viskose, Baumwolle, Polyacryl, Polyamid, Polypropylen oder texturierte Filamente oder Mischungen daraus sind.

6. Elastische Einlage nach einem der Ansprüche 1 bis 5, **dadurch gekennzeichnet, dass** die Legung des Gewirkes eine versetzte Franse, Trikot oder Tuch ist.

7. Verfahren zur Herstellung einer elastischen Einlage auf Basis eines Gewirkes als Träger mit einer auf einer Seite des Trägers aufgebrachten Adhäsivschicht, durch
a) Herstellung eines Rohgewirkes
b) Durchführung eines Wasch- und/oder Schrumpfvorganges
c) ggf. Durchführung eines Färbevorganges
d) Thermostabilisierung des Rohgewirkes
e) Beschichtung einer Seite des erhaltenen Rohgewirkes mit einem Adhäsiv,
**dadurch gekennzeichnet, dass** das Rohgewirke aus mindestens zwei Kettfadensystemen hergestellt wird, wobei mindestens eines als Teilschuss in das Gewirke eingelegt wird und nicht elastische Stapelfasergarne enthält, wobei die Einlage auch in Schussrichtung elastisch ist.

8. Verfahren nach Anspruch 7, wobei ein Aufrauschritt des Rohgewirkes vor oder nach der Beschichtung des Gewirkes erfolgt.

9. Verwendung eines Gewirkes aus mindestens zwei Kettfadensystemen, wobei mindestens ein Kettfadensystem als Teilschuss in ein Gewirke eingelegt ist und nicht elastische Stapelfasergarne enthält, wobei auf einer Seite des Gewirkes eine Adhäsivschicht aufgebracht ist, zur Erzeugung von auch in Schussrichtung elastischen Fixiereinlagen für Bekleidungsstücke.

10. Verwendung nach Anspruch 9, wobei das Gewirke zur Verstärkung des Vorderteils von Bekleidungsstücken verwendet wird.

11. Verwendung nach Anspruch 9, zur Verstärkung von Krägen und/oder Manschetten.

## Claims

1. Elastic insert based on a knitted fabric as support with an adhesive layer applied to one side of the support, **characterised in that** the knitted fabric is constructed from at least two warp thread systems, wherein at least one warp thread system is placed in the knitted fabric as partial weft and contains non-elastic staple fibre yarns, and **in that** the insert is also elastic in weft direction.

2. Elastic insert according to claim 1, **characterised in that** the partial weft is effected up to under ten needles.

3. Elastic insert according to claim 1 or 2, **characterised in that** the staple fibre yarn of the warp thread system, which is placed in the partial weft, contains viscose, cotton, polyacrylic, polyester, polyamide, polypropylene or a mixture thereof.

4. Elastic insert according to one of claims 1 to 3, **characterised in that** the at least one warp thread system, which is placed in the partial weft, preferably contains false twist-textured filaments in addition to the staple fibre yarns.

5. Elastic insert according to one of claims 1 to 4, **characterised in that** the materials of the other warp thread systems are polyester, polyamide or also viscose, cotton, polyacrylic, polyamide, polypropylene or textured filaments or mixtures thereof.

6. Elastic insert according to one of claims 1 to 5, **characterised in that** the patterning of the knitted fabric is an offset fringe, tricot or cloth.

7. Process for producing an elastic insert based on a knitted fabric as support with an adhesive layer applied to one side of the support, by
a) producing a coarse knitted fabric
b) carrying out a washing and/or shrinking process
c) optionally carrying out a dyeing process
d) thermostabilisation of the coarse knitted fabric
e) coating one side of the coarse knitted fabric obtained with an adhesive,
**characterised in that** the coarse knitted fabric is produced from at least two warp thread systems, wherein at least one is placed in the knitted fabric as partial weft and contains non-elastic staple fibre yarns, wherein the insert is also elastic in weft direction.

8. Process according to claim 7, wherein a teasing step of the coarse knitted fabric is effected before or after the coating of the knitted fabric.

9. Use of a knitted fabric made from at least two warp thread systems, wherein at least one warp thread system is placed in a knitted fabric as partial weft and contains non-elastic staple fibre yarns, wherein an adhesive layer is applied to one side of the knitted fabric for producing fixing inserts, which are also elastic in weft direction, for pieces of clothing.

10. Use according to claim 9, wherein the knitted fabric is used to reinforce the front part of pieces of clothing.

11. Use according to claim 9 to reinforce collars and/or cuffs.

## Revendications

1. Entoilage élastique à base d'un tricot faisant office de support, avec une couche adhésive appliqué sur une face du support, **caractérisé en ce que** le tricot est constitué d'au moins deux systèmes de fils de chaîne, au moins un système de fils de chaîne étant inséré en tant que tramage partiel dans le tricot et contient des fils de fibres discontinus non élastiques, et **en ce que** l'entoilage est également élastique dans la direction de la trame.

2. Entoilage élastique selon la revendication 1,
**caractérisé en ce que** le tramage partiel s'effectue jusque sous dix aiguilles.

3. Entoilage élastique selon la revendication 1 ou 2, **caractérisé en ce que** le fil de fibre discontinu du système de fils de chaîne, inséré dans le tramage partiel, contient de la viscose, du coton, du polyacryl, du polyester, du polyamide, du polypropylène ou un mélange de ceux-ci.

4. Entoilage élastique selon l'une des revendications 1 à 3, **caractérisé en ce que** le au moins un système de fils de chaîne, inséré dans le tramage partiel, contient, en plus des fils de fibres discontinus, des filaments, de préférence texturés en fausse torsion.

5. Entoilage élastique selon l'une des revendications 1 à 4, **caractérisé en ce que** les matériaux des autres systèmes de fils de chaîne sont le polyester, le polyamide ou également la viscose, le coton, le polyacryl, le polyamide, le polypropylène ou des filaments texturés ou des mélanges de ceux-ci.

6. Entoilage élastique selon l'une des revendications 1 à 5, **caractérisé en ce que** l'armure du tricot est une frange, un tricot ou une toile décalé(e).

7. Procédé de fabrication d'un entoilage élastique à base d'un tricot faisant office de support, avec une couche adhésive appliqué sur une face du support, par :
a) fabrication d'un tricot brut,
b) accomplissement d'un processus de lavage ou de retrait,
c) le cas échéant, accomplissement d'un processus de teinture,
d) thermostabilisation du tricot brut,
e) revêtement d'une face du tricot brut obtenu avec un adhésif,
**caractérisé en ce que** le tricot brut est fabriqué à partir d'au moins deux systèmes de fils de chaîne, au moins un système de fils de chaîne étant inséré en tant que tramage partiel dans le tricot et contient des fils de fibres discontinus non élastiques, l'entoilage étant également élastique dans la direction de la trame.

8. Procédé selon la revendication 7, **caractérisé en ce qu'**une étape de traitement visant à créer une rugosité du tricot brut est effectuée, avant ou après le revêtement du tricot.

9. Utilisation d'un tricot constitué d'au moins deux systèmes de fils de chaîne, au moins un système de fils de chaîne étant inséré en tant que tramage partiel dans un tricot et contenant des fils de fibres discontinus non élastiques, une couche d'adhésif étant appliquée sur une face du tricot, pour produire des entoilages de fixation élastique dans la direction de la trame, pour des pièces d'habillement.

10. Utilisation selon la revendication 9, le tricot étant utilisé pour le renforcement de la partie avant de pièces d'habillement.

11. Utilisation selon la revendication 9, pour le renforcement de cols et/ou de manchettes.
